# EUROPEAN PATENT APPLICATION

(11) **EP 2 615 751 A1**
(43) Date of publication of application: **17.07.2013**
(21) Application number: 13150747.7
(22) Date of filing: 10.01.2013
(51) Int. Cl.: H04B 15/00

(54) **Method and device for optimizing a wireless communication equipment**

(30) Priority: 11.01.2012 TW 101101126
(71) Applicant: Lai, Ping-Li, Taichung City 414 (TW)
(72) Inventor: Lai, Ping-Li, Taichung City 414 (TW)
(74) Representative: Strehl Schübel-Hopf & Partner

(57) **Abstract**

A method and a device for optimizing a wireless communication equipment, the method including a step of coupling a conductive part to a negative electrode of the wireless communication equipment to absorb a non-operation-frequency-band noise and thereby filter out the non-operation-frequency-band noise, and operation performance, signal-to-noise ratio, and power consumption of the wireless communication equipment are therefore optimized.

## Description

### BACKGROUND OF THE INVENTION

### Field of the Invention

The present invention relates to a method and a device for optimizing a wireless communication equipment, the method and device being capable of filtering out a non-operation-frequency-band noise to optimize operation performance, signal-to-noise ratio, and power consumption of the wireless communication equipment.

### Description of the Related Art

Ever since Martin Cooper- a former general manager of communication system division of Motorola Inc.-invented the first portable phone in 1973, the world has entered an era of GSM (global system for mobile communications). After that, communication standards of 1G (first generation), 2G (second generation), 3G (third generation), and 4G (fourth generation) has been developed. In addition, Wireless PAN (wireless personal area network), Bluetooth, Wi-Fi (wireless fidelity), and WLAN (wireless local area network) also have been devised.

As a result, our sky is full of a variety of EM (electromagnetic) signals. For cell phones, there are: GSM900 at 900Mhz, GSM1800 at 1800Mhz, 3GWCDMA at 2100Mhz, and CDMA2000 at 800Mhz. For personal area networks, there are: Bluetooth network at 2.4Ghz, and Wi-Fi network at 2.4Ghz-5Ghz.

However, there are also a variety of low frequency noises (or spikes) which can interfere with the mentioned EM signals in the sky.

In view of the problem mentioned above, the present invention proposes a method and a device for optimizing a wireless communication equipment.

### Summary of the Invention

One objective of the present invention is to provide a method for optimizing a wireless communication equipment, the method including a step of coupling a conductive part to a negative electrode of the wireless communication equipment to absorb a non-operation-frequency-band noise and thereby filter out the non-operation-frequency-band noise, and a signal-to-noise ratio of the wireless communication equipment is therefore optimized.

The conductive part as mentioned in the method can be located inside and/or outside of the wireless communication equipment.

The conductive part as mentioned in the method can prevent the non-operation-frequency-band noise from generating spikes on an operation voltage of the wireless communication equipment, thereby promoting operation performance of the wireless communication equipment and achieving an effect of power saving.

Another objective of the present invention is to provide a device for optimizing a signal-to-noise ratio of a wireless communication equipment, the device including a conductive part, which is coupled to a negative electrode of the wireless communication equipment to absorb a non-operation-frequency noise and thereby filter out the non-operation-frequency-band noise, and the signal-to-noise ratio of the wireless communication equipment is therefore optimized.

The conductive part as mentioned in the device can be located inside and/or outside of the wireless communication equipment.

The conductive part as mentioned in the device can prevent the non-operation-frequency-band noise from generating spikes on an operation voltage of the wireless communication equipment, thereby promoting operation performance of the wireless communication equipment and achieving an effect of power saving.

The wireless communication equipment as mentioned above has a power input port, and the device can be a plug module for plugging into the power input port of the wireless communication equipment.

To make it easier for our examiner to understand the objective of the invention, its structure, innovative features, and performance, we use preferred embodiments together with the accompanying drawings for the detailed description of the invention.

### BRIEF DESCRIPTION OF THE DRAWINGS

FIG. 1 is an illustrative diagram of the present invention.
FIG. 2 is a top view of a disassembled diagram of an embodiment of the present invention.
FIG. 3 is a bottom view of a disassembled diagram of an embodiment of the present invention.
FIG. 4 is a top view of an assembled diagram of an embodiment of the present invention.

### DETAILED DESCRIPTION OF THE PREFERRED EMBODIMENTS

The present invention will be described in more detail hereinafter with reference to the accompanying drawings that show the preferred embodiments of the invention.

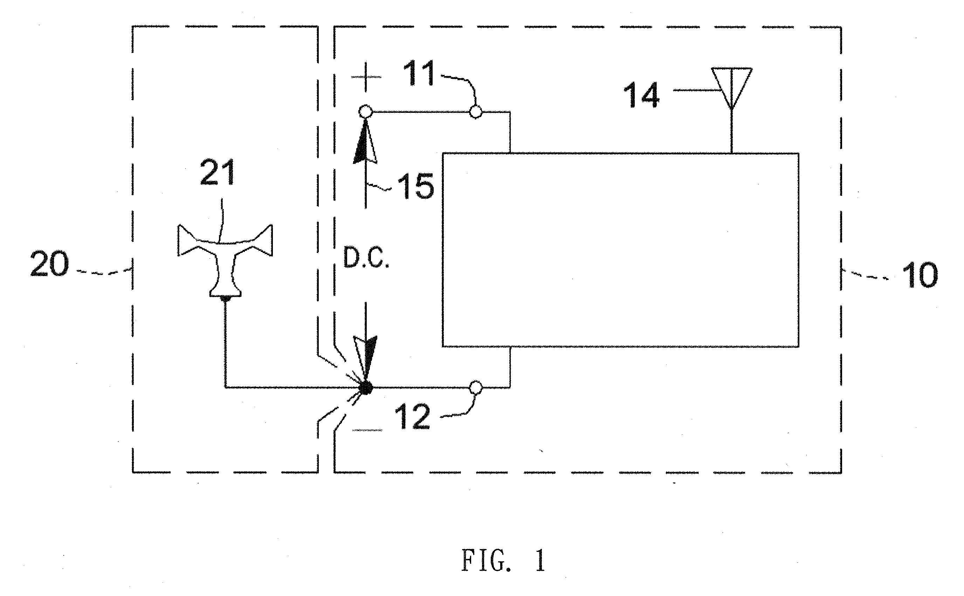

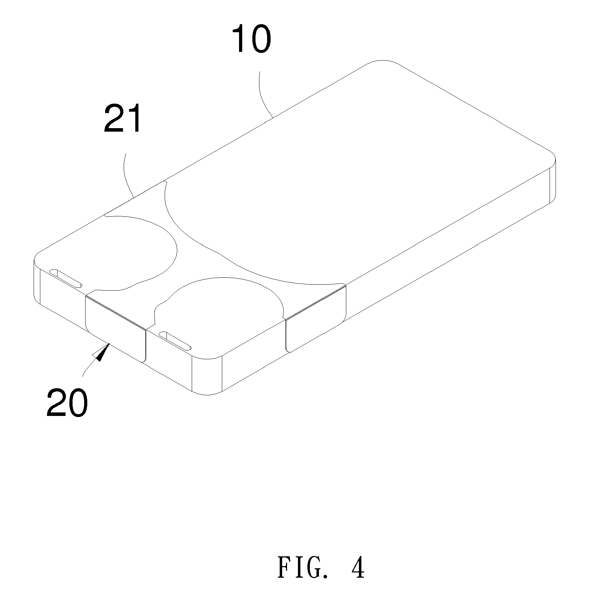

To get to know better the present invention's method for optimizing a wireless communication equipment, please refer to FIG.1-4. The method includes a step of coupling a conductive part 21 to a negative electrode 12 of a wireless communication equipment 10 to absorb a non-operation-frequency noise (or spike) and thereby filter out the non-operation-frequency-band noise (or spike), and a signal-to-noise ratio of the wireless communication equipment 10 is therefore optimized, wherein the non-operation-frequency noise (or spike) is located in a frequency band lower than an operation frequency band of the wireless communication equipment 10.

The conductive part 21 can be located inside and/or outside of the wireless communication equipment 10.

The conductive part 21 can prevent the non-operation-frequency-band noise from generating spikes on an operation voltage of the wireless communication equipment 10, thereby promoting operation performance of the wireless communication equipment 10 and achieving an effect of power saving.

In comparing the non-operation-frequency-band noise (or spike) with a signal carried in an operation-frequency-band, it is known that the non-operation-frequency-band noise (or spike) has a better transmission in a lower frequency channel, while the signal carried in the operation-frequency-band has a better transmission in a higher frequency channel.

Accordingly, when the non-operation-frequency-band noise (or spike) appears in an environment around the wireless communication equipment 10, by coupling the conductive part 21 to the negative electrode 12 of the wireless communication equipment 10, a lower frequency channel can therefore be provided to absorb the non-operation-frequency noise (or spike) to optimize a signal-to-noise ratio of an operation-frequency-band, promote operation performance of the wireless communication equipment 10, and achieve an effect of power saving.

To get to know better the present invention's device for optimizing a signal-to-noise ratio of a wireless communication equipment, please refer to FIG. 1-4. A device 20 for optimizing a signal-to-noise ratio of a wireless communication equipment 10 includes a conductive part 21, which is coupled to a negative electrode 12 of a wireless communication equipment 10 to absorb a non-operation-frequency noise (or spike) and thereby filter out the non-operation-frequency-band noise (or spike), and the signal-to-noise ratio of the wireless communication equipment 10 is therefore optimized, wherein the non-operation-frequency noise (or spike) is located in a frequency band lower than an operation frequency band of the wireless communication equipment 10.

The conductive part 21 can be located inside and/or outside of the wireless communication equipment 10.

The conductive part 21 can prevent the non-operation-frequency-band noise from generating spikes on an operation voltage of the wireless communication equipment 10, thereby promoting operation performance of the wireless communication equipment 10 and achieving an effect of power saving.

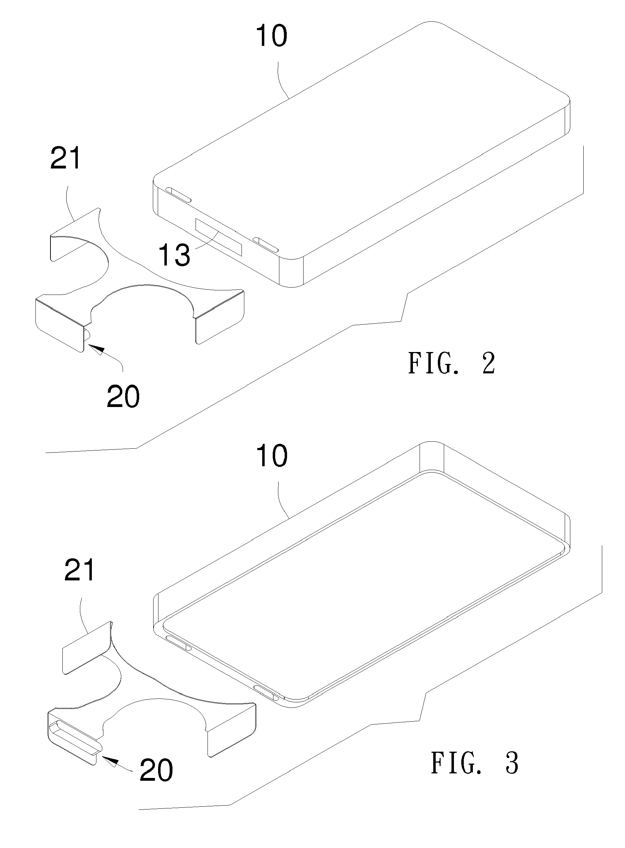

The wireless communication equipment 10 has a power input port 13, and the device 20 can be a plug module (as illustrated in FIG. 2-4) for plugging into the power input port 13 of the wireless communication equipment 10.

As the wireless communication equipment 10 generally only possesses a "higher frequency channel (that is, signal channel)" and has no "lower frequency channel (that is, noise channel or spike channel)", therefore, once a lower frequency noise or spike shows up, the lower frequency noise or spike will enter the "higher frequency channel" via a node of an antenna 14 (a patched inverse F antenna-PIFA, for example) of the wireless communication equipment 10 to interfere with a signal therein, and thereby degrade communication quality of the wireless communication equipment 10.

However, thanks to a "lower frequency channel (that is, noise channel or spike channel)" provided by the present invention, when the "lower frequency noise or spike" appears, it will be absorbed by the "lower frequency channel" instead of entering the "higher frequency channel (that is, signal channel)", and therefore won't interfere with the signal in the "higher frequency channel". As a result, the communication quality of the wireless communication equipment 10 can be effectively promoted, and the signal-to-noise ratio thereof can be optimized.

To go further, as the wireless communication equipment 10 generally only possesses a "higher frequency channel (that is, signal channel)" and has no "lower frequency channel (that is, noise channel or spike channel)", therefore, once a lower frequency noise or spike shows up, the lower frequency noise or spike will take the node (not shown in the figure) of the antenna 14 (a patched inverse F antenna-PIFA, for example) of the wireless communication equipment 10 as a grounding point, and travel to a positive electrode 11 of the wireless communication equipment 10 through an operation circuit of the wireless communication equipment 10. As a result, the "lower frequency noise or spike" will be in parallel with a power 15 and therefore consume power of the wireless communication equipment 10, that is, the "lower frequency noise or spike" can cause a power waste.

However, thanks to the "lower frequency channel (that is, noise channel or spike channel)" provided by the present invention, when the "lower frequency noise or spike" appears, it will choose the "lower frequency channel (that is, noise channel or spike channel)" instead of entering the "higher frequency channel (that is, signal channel)", take the conductive part 21 as a grounding point, and travel to the negative electrode 12 of the wireless communication equipment 10. As a result, the "lower frequency noise or spike" will be in series with the power 15 and the power consumed by the "lower frequency noise or spike" mentioned above can therefore be avoided to achieve an effect of power saving.

In addition, due to the design mentioned above, the present invention can decrease a noise or spike current flowing through the node of the antenna 14 of the wireless communication equipment 10, and thereby enhance the signal-to-noise ratio. To sum up, the present invention can offer the advantages of optimizing signal-to-noise ratio, power consumption, and operation performance of the wireless communication equipment 10.

It is to be noted that the present invention is not intended to be limited to the application mentioned above. On the contrary, the present invention can be applied to cell phone communications, wireless network linkages, or any other wireless communication equipments.

While the invention has been described by way of example and in terms of preferred embodiments, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

In summation of the above description, the present invention herein enhances the performance than the conventional structure and further complies with the patent application requirements and is submitted to the Patent and Trademark Office for review and granting of the commensurate patent rights.

## Claims

1. A method for optimizing a wireless communication equipment (10), including a step of coupling a conductive part (21) to a negative electrode (12) of said wireless communication equipment (10) to absorb a non-operation-frequency-band noise and thereby filter out said non-operation-frequency-band noise, and a signal-to-noise ratio of said wireless communication equipment (10) is therefore optimized, wherein said non-operation-frequency-band noise is located in a frequency band lower than an operation frequency band of said wireless communication equipment (10).

2. The method for optimizing a wireless communication equipment (10) as claim 1, wherein said conductive part (21) is located inside and/or outside said wireless communication equipment (10).

3. The method for optimizing a wireless communication equipment (10) as claim 1, wherein said conductive part (21) is used to prevent said non-operation-frequency-band noise from generating spikes on an operation voltage of said wireless communication equipment (10), thereby promoting operation performance of said wireless communication equipment (10).

4. A device (20) for optimizing a signal-to-noise ratio of a wireless communication equipment (10), said device (20) comprising a conductive part (21), which is used to couple with a negative electrode (12) of said wireless communication equipment (10) to absorb a non-operation-frequency noise and thereby filter out said non-operation-frequency-band noise, and said signal-to-noise ratio of the wireless communication equipment (10) is therefore optimized, wherein said non-operation-frequency-band noise is located in a frequency band lower than an operation frequency band of said wireless communication equipment (10).

5. The device (20) for optimizing a signal-to-noise ratio of a wireless communication equipment (10) as claim 4, wherein said conductive part (21) is located inside and/or outside said wireless communication equipment (10).

6. The device (20) for optimizing a signal-to-noise ratio of a wireless communication equipment (10) as claim 4, wherein said conductive part (21) is used to prevent said non-operation-frequency-band noise from generating spikes on an operation voltage of said wireless communication equipment (10), thereby promoting operation performance of said wireless communication equipment (10).

7. The device (20) for optimizing a signal-to-noise ratio of a wireless communication equipment (10) as claim 4, wherein said wireless communication equipment (10) has a power input port (13), and said device (20) is a plug module for plugging into said power input port (13) of said wireless communication equipment (10).
